# EUROPÄISCHE PATENTSCHRIFT

(11) **EP 1 257 227 B1**
(45) Veröffentlichungstag und Bekanntmachung des Hinweises auf die Patenterteilung: **27.09.2006**
(21) Anmeldenummer: 01903771.2
(22) Anmeldetag: 15.02.2001
(51) Int. Cl.: A61C 5/06, B65D 81/32, B05C 17/005

(54) **MISCHKAPSEL**
MIXING CAPSULE
CAPSULE SERVANT A REALISER UN MELANGE

(30) Priorität: 21.02.2000 DE 10007580
(43) Veröffentlichungstag der Anmeldung: 20.11.2002
(73) Patentinhaber: 3M ESPE AG, 82229 Seefeld (DE)
(72) Erfinder: MARTIN, Mathias, 94469 Deggendorf (DE)
(74) Vertreter: Brem, Roland
(86) Internationale Anmeldenummer: PCT/EP2001/001647
(87) Internationale Veröffentlichungsnummer: WO 2001/062176

(56) Entgegenhaltungen:
- DE-A- 3 635 574
- DE-A- 3 920 537
- US-A- 4 362 242
- US-A- 4 863 017

## Beschreibung

Die vorliegende Erfindung betrifft eine Mischkapsel und ein eine Mischkapsel enthaltende Vorrichtung, insbesondere ein Mischgerät und/oder eine Applikationsvorrichtung sowie ein Verfahren zur Verwendung der Mischkapsel, insbesondere zur Herstellung eines vorzugsweise mehrere Komponenten enthaltenden Dentalwerkstoffs.

Zur Herstellung von Gemischen aus zwei oder mehr Komponenten dienen Mischkapseln, die vom Hersteller mit den Komponenten in voneinander getrennten Kammern befüllt werden. Vom Anwender werden die Komponenten, etwa durch Zerstörung einer die Kammer trennenden Wand in Verbindung gebracht und miteinander gemischt.

Im Dentalbereich sind Mischkapseln zur Herstellung von Dentalwerkstoffen bekannt, die häufig aus einer pulverförmigen und einer flüssigen Komponente gemischt werden, wobei der Mischvorgang üblicherweise in einem Schüttelgerät erfolgt. Die fertig gemischte Substanz wird dann durch eine an der Mischkapsel angeformte Ausbringtülle direkt auf die Arbeitsstelle, etwa in eine Zahnkavität ausgebracht.

Aus der DE 36 35 574 A ist eine Mischkapsel bekannt, die zur Herstellung von Verfugungs- und Abdichtmassen gedacht ist. Bei einem in diesem Dokument beschriebenen Ausführungsbeispiel ist eine in dem Ausbringkolben vorhandene Nebenkammer, auf der der Hauptkammer der Kapsel zugewandten Seite von einer Folie und auf der entgegengesetzten Seite von einem in dem Ausbringkolben verschiebbar angeordneten Hilfskolben begrenzt. Im Ausgangszustand der Mischkapsel ist in der Nebenkammer außer der zweiten Komponente ein Mischkörper untergebracht, der zunächst durch manuelle Verschiebung des Hilfskolbens zur Zerstörung der Folie dient und anschließend den Mischvorgang unterstützt. Um die zum Verschieben des inneren Kolbens samt Kugel erforderliche Volumenverkleinerung zu ermöglichen, ist in der Mischkammer ein Gaskissen vorgesehen.

Bei einer weiteren Ausführungsform der bekannten Mischkapsel befindet sich die Mischkugel zunächst in der Hauptkammer. In diesem Fall ist die in dem Kolben vorhandene Nebenkammer gegenüber der Hauptkammer durch einen Deckel und auf ihrer Rückseite durch einen Balg verschlossen. Durch manuellen Druck auf den Balg wird der Deckel vom Kolben weggedrückt, so dass die beiden Kammern zur Aktivierung der Kapsel in Verbindung gebracht werden.

In beiden Fällen ist zur Aktivierung der Kapsel ein eigener manuell durchzuführender Arbeitsschritt erforderlich. Weiterhin wird ein Gaskissen benötigt, um die zum Lösen des Deckels erforderliche Volumenverkleinerung zu ermöglichen.

Bei einer aus der DE 94 00 374 U1 bekannten Mehrkomponenten-Mischkapsel für Dentalzwecke ist eine erste Komponente in einer Mischkammer und eine zweite, flüssige Komponente in einem Folienbeutel enthalten, der in einer von der

Mischkammer durch ein verschiebbares Wandelement getrennten Nebenkammer angeordnet ist. Ein in der Mischkammer vorhandener zylindrischer Mischkörper dient dazu, am Beginn des Mischvorgangs das Wandelement zu verschieben und dadurch den Folienbeutel zusammenzupressen, so dass dieser aufplatzt und die flüssige Komponente durch einen in dem Wandelement vorhandenen Flüssigkeitsdurchlass freigibt.

Eine Schwierigkeit bei dieser Vorrichtung besteht darin, das Wandelement, den Folienbeutel und die Kapsel selbst so zu gestalten und mit derart geringen Toleranzen zu dimensionieren, dass das Wandelement zwar im Lager- und Transportzustand der Kapsel in seiner Ausgangsstellung festgehalten wird, unter Einwirkung des Mischköpers jedoch so weit und mit solcher Kraft verschoben wird, dass der Folienbeutel aufplatzt. Dabei ist zu berücksichtigen, dass eine oftmals nur teilweise erfolgende Entleerung des Folienbeutels zu unerwünschten Änderungen im Mischungsverhältnis und damit zu Verschlechterungen in den Eigenschaften des fertigen Gemisches führt. Nachteilig ist auch, dass sich diese Anordnung nur zum Mischen, nicht aber auch zum Applizieren der Paste eignet.

In DE 93 03 268 U1 ist eine Mehrkomponenten-Mischkapsel mit Ausspritzeinrichtung für eine gemischte Masse, vornehmlich für Dentalzwecke beschrieben. Diese Mischkapsel weist einen im Inneren der Kapsel gelegenen Aktivierungsdorn auf, der über Halterungen im Inneren des Kapselkörpers gegen die Richtung des Auspressens verankert ist, sowie ein im Inneren eines Stempels untergebrachtes Flüssigkeitskompartiment, das gegen den Aktivierungsdorn mit einer zerstörbaren Membran abgedichtet ist. Der Aktivierungsdorn ist bündig in den leeren Behälter im Inneren des Stempels eingepasst und dichtet diesen während des Auspressens ab. Während des Auspressens in Längsrichtung gelangt dabei die Flüssigkeit durch die dünne Kapillare, die im Inneren des Aktivierungsdorns zu liegen kommt, in den Mischraum. Es wird ausgeführt, dass auch während des Mischvorgangs in einem Vibrationsmischer und während des Ausbringens der Masse über die Ausspritzdüse stets ein kleiner, nicht exakt reproduzierbarer Flüssigkeitsrest in der Kapillare verbleibt. Dies beeinträchtigt die Qualität des Mischungsergebnisses.

Eine vergleichbare Mischkapsel ist in der Patentanmeldung WO 00/30953 beschrieben. Nachteilig an dieser Mischkapsel ist, dass es bei der Aktivierung der Kapsel durch die Kugel zu einer nicht unerheblichen Geräuschentwicklung kommen kann. Zudem kann es durch die durch den Mischkörper verursachte Krafteinwirkung zur Abtrennung der Trennfolie kommen, was zu einer unerwünschten Verunreinigung des anzumischenden Materials führen kann.
Eine weitere Mischkapsel ist im Dokument US 4 362 242 offenbart.

Eine primäre Aufgabe der vorliegenden Erfindung kann darin gesehen werden, eine verbesserte Mischkapsel bereitzustellen, die die vorgenannten Probleme vermeidet, ohne das gewünschte Mischungsergebnis beeinträchtigt wird.

Weiterhin kann die Aufgabe der vorliegenden Erfindung darin gesehen werden, eine Vorrichtung bereitzustellen, die es erlaubt, mehrkomponentige Materialien auf einfache Weise zu mischen und auszubringen.

Diese Aufgabe wird durch eine Mischkapsel und ein Verfahren gelöst, wie es in den Ansprüchen beschrieben ist.

Mit den Begriffen "umfassen" oder "enthalten" im Sinne der Erfindung wird eine nicht abschließende Aufzählung von Merkmalen eingeleitet. Der Begriff "ein" ist als unbestimmte Mengenangabe im Sinne von "mindestens ein" aufzufassen.

Die erfindungsgemäße Mischkapsel weist dabei u.a. folgende Vorteile auf:

Der in der Mischkapsel vorhandene bewegliche Körper dient einerseits zum Aktivieren der Kapsel unter Zerstörung der Trennvorrichtung, andererseits unterstützt er den Mischvorgang.

Dadurch, dass der Körper beim Mischen seine äußere Form ändern kann, nimmt die Geräuschentwicklung während des Mischvorgangs kontinuierlich ab.

Zudem wird das Ausbringen der angemischten Masse durch den Mischkörper nicht beeinträchtigt, was sich insbesondere beim Ausbringen von hochviskosem Material als Vorteil erweist.

Damit verbunden ist gegebenenfalls auch eine Reduzierung der Kraft, die für das Ausbringen der Masse durch Verschieben des Kolbens aufgebracht werden muss.

Durch Zerstörung der äußeren Form des Körpers wird zudem die Gefahr verringert, dass die Trennvorrichtung während des Mischvorgangs vom Kolben abgetrennt wird und die abgetrennten Teile die anzumischende Masse verunreinigen, bzw. den Ausbringvorgang beeinträchtigen.

Änderung der äußeren Form im Sinne der Erfindung bedeutet plastische Verformung, Oberflächenvergrößerung, Zerstörung der äußeren Gestalt, Pulverisierung des Materials des Körpers, Einbindung und/oder Einarbeitung des Materials, das der Körper umfasst bzw. aus dem der Körper im wesentlichen besteht, in die zu mischende Substanz.

Da sich der Körper im Ausgangszustand in der Hauptkammer befindet, erfolgt die Aktivierung vorzugsweise automatisch zu Beginn des Mischvorgangs, im Gegensatz zu den aus dem Stand der Technik bekannten manuell durchzuführenden Aktivierungen.

Da femer die Nebenkammer von der Hauptkammer durch die von dem Körper durchschlagbaren Trennvorrichtung getrennt ist, bildet sie beim anschließenden Mischvorgang einen Teil der Mischkammer selbst. Dadurch ist gewährleistet, dass die in der Nebenkammer enthaltende zweite Komponente vollständig in das entstehende Gemisch eingeht.

Zudem führt die Vereinigung von Haupt- und Nebenkammer zu einer vorteilhaften Vergrößerung des zur Verfügung stehenden Mischraumes.

Weiterhin vorteilhaft ist die geringe Anzahl und einfache Gestaltung der Bauteile der Mischkapsel.

Gegebenenfalls befinden sich in der Mischkapsel mehrere frei bewegliche Körper, die beim Mischvorgang ihre äußere Form ändern.

Vorzugsweise ist der bewegliche Körper kugelförmig ausgestaltet. Der Durchmesser der Kugel liegt vorzugsweise im Bereich von 4 bis 10 mm, besonders bevorzugt im Bereich von 5 bis 8 mm. Denkbar ist aber auch jede andere Gestaltung des Körpers, beispielsweise eine Gestaltung in der Form eines Rotationsellipsoids oder eine Gestaltung mit Ecken und Kanten, gegebenenfalls in Form eines Würfels. Eine derartige Gestaltung kann die Trennschicht gegebenenfalls leichter zerstören und erlaubt gegebenenfalls eine geringere Masse und/oder Größe des Körpers.

Das Gewicht des beweglichen Körpers ist dabei derart auf die Beschaffenheit der Trennvorrichtung eingestellt, dass die Trennvorrichtung bei herkömmlichem Transport und normaler Handhabung durch den beweglichen Körper nicht beschädigt wird. Erst ab in Kapsel-Mischgeräten üblich auftretenden Beschleunigungswerten von beispielsweise 100 bis 500 g (1g = 9.81 ms⁻²), vorzugsweise 200 bis 400 g kann die Trennvorrichtung durchschlagen werden.

Brauchbare Kugelmaterialien haben eine Dichte im Bereich von 1,5 bis 9,0 g/cm³, vorzugsweise im Bereich von 2,0 bis 6,0 g/cm³. Die Masse des Köpers liegt üblicherweise im Bereich von 0,1 bis 2,0 g, vorzugsweise im Bereich von 0,2 bis 1,0 g.

Für den Körper in der Mischkapsel sind insbesondere Materialien geeignet, die die Eigenschaften der angemischten Masse nicht negativ beeinflussen. Solche Materialien sind vorzugsweise anorganischer Natur gegebenenfalls keramischer Natur und umfassen beispielsweise Glas, Siliziumoxid, Aluminiumoxid oder Zirkonoxid.

Die Verunreinigung der angemischten Masse durch Material aus dem der Körper besteht, lässt sich auch dadurch vermeiden, dass der Körper aus dem gleichen Material besteht, gegebenenfalls dieses umfasst, welches sich als erste Komponente in Pulver- und/oder Granulatform in der Hauptkammer der Kapsel gegebenenfalls befindet. Vorzugsweise wird der Körper über einen Pressvorgang aus dem Material der ersten Komponente hergestellt.

Denkbar ist auch, dass sich in der Hauptkammer neben dem Körper keine weitere Komponente befindet und sämtliches anzumischendes Material der ersten Komponente als Körper gepresst vorliegt.

Eine derartige Ausführungsform ist insbesondere dann günstig, wenn vermieden werden soll, dass der Impuls des Körpers beim Anmischvorgang durch sich in der Hauptkammer befindliches pulverförmiges Material der ersten Komponente gedämpft wird. Dies ermöglicht gegebenenfalls eine Reduzierung des Gewichts des Körpers, das erforderlich ist, um die Trennwand zu durchschlagen.

Zudem ermöglicht diese Ausführungsform eine Reduzierung der Baugröße der Mischkapsel, da beim Mischen der sich auflösende Körper Bestandteil des zu mischenden Materials wird und somit das für den Mischvorgang benötigte Volumen nicht einschränkt.

Die Form der Nebenkammer hat gegebenenfalls die Form einer Halbkugel mit einem gegenüber dem Körper etwas größeren Radius. Denkbar ist aber auch jede andere Gestaltung, beispielsweise eine zylinderförmige Form.

Das zum Mischen zur Verfügung stehende Gesamtvolumen der Mischkapsel liegt üblicherweise im Bereich von 0,5 bis 5 ml, insbesondere 1 bis 3 ml. Vorzugsweise ist das Volumen der Nebenkammer geringer als das Volumen der Hauptkammer. Das Volumen der Nebenkammer beträgt üblicherweise 0,05 bis 0,5 ml, vorzugsweise 0,1 bis 0,3 ml.

Die erfindungsgemäße Mischkapsel erfordert auch nicht notwendigerweise das Vorhandensein von kanalförmigen Vertiefungen, die beispielsweise in die Nebenkammer in Form von Nuten und/oder in die Stimwand der Hauptkammer in Form von Rinnen eingearbeitet sein können, um das Ausbringen von insbesondere hochviskosen Substanzen aus der Mischkapsel zu gewährleisten.

In einer besonderen Ausführungsform weist die Trennvorrichtung mindestens eine Sollbruchstelle auf, die unabhängig von der Beschaffenheit des Randbereichs des Kolbens am Übergang zur Nebenkammer zu einem gezielten und sicheren Öffnen der Nebenkammer beiträgt. Die Vorschädigung der Trennvorrichtung bzw. die Präparierung einer Sollbruchstelle kann beispielsweise durch Strahlung, wie Laserstrahlung, mechanisch durch Anritzen oder Einschneiden mit einem Messer oder thermisch durch Anschmelzen oder Einritzen mit einem beheizbaren Messer erfolgen.

Die Präparierung wird vorzugsweise nur am gegebenenfalls vorhandenen Kunststoffteil der Trennvorrichtung, d.h. an dem auf einer oder auch auf beiden Seiten einer Metallschicht oder SiOₓ-haltigen Schicht vorhandenen Trägermaterial vorgenommen. Damit bleibt die Dichtigkeit der gegebenenfalls vorhandenen Metall-oder SiOₓ-haltigen Schicht erhalten.

Die Form der Präparierung ist dabei beliebig, erfolgt aber vorzugsweise in einer Form, die ein Abreißen der Trennvorrichtung oder Teilen davon nach oder beim Durchschlagen der Trennvorrichtung durch den Körper vermeidet. Ein Präparieren der Trennvorrichtung in der Form von zwei oder mehr sich in der Symmetrieachse der Kapsel kreuzenden Linien hat sich als günstig erwiesen.

Brauchbar ist auch eine stemförmige Präparierung mit sich verzweigenden Ästen. Eine derartige Präparierung erleichtert den Mischvorgang, da keilförmigen Folienteile der Trennvorrichtung im Bereich der Wandung der Nebenkammer eine kürzere Sehnenlänge aufweisen, wodurch sich die Folienbestandteile beim Mischen leichter umklappen lassen.

Günstig ist auch eine Präparierung bei der ein Folienteil die Umrisse eines Bowling-Kegels aufweist, wobei der Kegelkopf kreisförmig gestaltet ist und sich dessen Mittelpunkt auf der Längsachse der Kartusche befindet. Auch diese Präparierung erleichtert das weitgehend vollständige Öffnen der Trennvorrichtung und damit den Zugang zur Nebenkammer.

Geeignete Präparierungen der Trennvorrichtung sind in den Figuren dargestellt.

In diesem Fall platzt die Trennschicht nur an einer definierten Stelle auf. Dadurch wird vermieden, dass die Trennschicht oder Teile davon in das Gemisch gelangen und den Ausbringvorgang behindern.

Ein weiterer Vorteil einer so erzeugten Sollbruchstelle besteht darin, dass auch verhältnismäßig dicke Folien, auch Mehrschichtfolien im Bereich von 50 bis 80 µm, vorzugsweise 60 bis 70 µm mit geringer Kraft (kleinere Masse des Körpers) durchstoßen werden können.

Die Trennvorrichtung haftet vorzugsweise an einer die Nebenkammer begrenzenden Ringfläche des Kolbens. Gegebenenfalls weist der Übergang zwischen der Ringfläche und der Innenwand der Nebenkammer einen scharfkantigen Bereich auf.

Dieser scharfkantige Bereich verläuft vorzugsweise über einen Teil des Umfangs, vorzugsweise im wesentlichen von 60° bis 120°, besonders bevorzugt von 70° bis 90°. Der Übergang zwischen Ringfläche und der Innenwand der Nebenkammer ist vorzugsweise im übrigen Bereich verrundet. Diese Ausführungsform vermeidet das vollständige Abreißen der Folie.

Die Trennvorrichtung liegt vorzugsweise in Form einer ein- oder mehrlagigen Folie, besonders bevorzugt in Form einer Verbundfolie oder auch Siegelfolie vor. Die Folie umfasst vorzugsweise mindestens eine Metallschicht, wie eine Aluminiumschicht und/oder Goldschicht und mindestens eine, gegebenenfalls zwei, drei oder mehrere Kunststoffschichten. Eine dreilagige Folie, umfassend eine Kunststoff-Außenschicht, mindestens eine Sperrschicht, vorzugsweise aus Kunststoff und eine Siegelschicht hat sich als günstig erwiesen, wobei es sich bei der Siegelschicht auch um eine Kunststofffolie oder einen Siegellack handeln kann.

Ferner kann die Trennvorrichtung anstelle oder zusätzlich zur Metallfolie metallisierte oder andere Kunststoffbarriere-Schichten, plasmapolymerisierte Schichten, wie Kohlenwasserstoff-haltige Schichten oder keramische Barriereschichten, wie SiOₓ₋Schichten aufweisen.

Die Trennvorrichtung wird beispielsweise durch Heißsiegeln, Kleben, Ultraschallverschweißen oder Hochfrequenzschweißen an der ringförmigen Stirnfläche des Kolbens befestigt.

Als Außenschicht sind beispielsweise geeignet Schichten, umfassend PET, PP, PE, PTFE, PVC und/oder PA, als Sperrschicht, Schichten, umfassend Al, SiOₓ, PVDC und/oder EVOH, als Siegelschicht, Schichten, umfassend HDPE, LDPE und/oder PP. Eine Schichtung PET - AI - LDPE oder PA - AI - LDPE hat sich als günstig erwiesen.

Die Schichtdicken der einzelnen Folien (Außenschicht, Sperrschicht, Siegelschicht) liegen im Bereich von 5 bis 60 µm, vorzugsweise von 8 bis 50 µm.

Die Trennvorrichtung kann femer zur Aufnahme einer dritten Komponente, beispielsweise in Form eines Folienkissens ausgebildet sein.

Vorteilhafte Werkstoffe für den Kolben der Mischkapsel umfassen Metalle, wie eloxiertes Aluminium, Titan und eisenhaltige Materialien, wie Stahlblech und Kunststoffe. Zur Verringerung der Durchlässigkeit von kunststoffhaltigen Kolben gegenüber Flüssigkeiten und Gasen weist ein solcher Kolben gegebenenfalls metallisierte oder mit anderen Materialien, die Sperrschichtwirkung haben, bedampfte oder beschichtete Kunststoffe auf. Als Kunststoffe sind beispielsweise möglich: PE, PP, PET, PTFE, PVC, Polyamide.

Weiterhin sind Kombinationen der vorgenannten Materialien, wie ein Metallinsert, vorzugsweise aus Aluminium oder Stahl, denkbar, das mit dem Kunststoff äußerlich und innerlich umgeben ist. Derartige Teile sind im Spritzgussverfahren herstellbar. Denkbar ist auch die Fertigung durch Thermoverformung und/oder Tiefziehen von beispielsweise Aluminiumverbundfolien oder kunststoffbeschichtetem Stahlblech.

Der Kolben kann auch in einem 2-Komponenten Spritzgussverfahren hergestellt werden. Hierbei wird beispielsweise zunächst ein Inlay gefertigt, das anschließend mit beispielsweise PE umspritzt wird.

Das Ausbringen der angemischten Masse aus der Mischkapsel erfolgt üblicherweise unter Verwendung einer geeigneten Appliziervorrichtung. Eine derartige Vorrichtung weist üblicherweise einen Stempel auf, der über Hebelwirkung den Kolben der Mischkapsel in Richtung der Ausbringöffnung bewegt.

Soll eine nahezu restlose Entleerung der Mischkapsel gewährleistet werden, gilt es Toträume zu vermeiden. Solche Toträume können insbesondere bei hochviskosen Massen ein Problem darstellen und wirken sich nachteilig aus, wenn das Gesamtvolumen der angemischten Masse im Vergleich zum Volumen des Totraums klein ist.

Soll der Totraum möglichst klein gehalten werden, ist es vorteilhaft, wenn in den Kolben und/oder die Stimwand der Hauptkammer keine zusätzlichen Vertiefungen, beispielsweise in Rinnenform, eingelassen sind.

Der Kolben ist vorzugsweise derart gestaltet, dass er sich beim Ausbringen verformen, insbesondere plastisch verformen lässt. Die Verformung erfolgt vorzugsweise derart, dass der Kolben sich der Gestaltung anpasst, die die Mischkapsel an dem Ende, an dem sich die Ausbringtülle befindet, aufweist.

Dies kann dadurch erreicht werden, dass der Kolben, der mindestens eine Nebenkammer aufweist, aus einem verformbaren Material besteht oder ein solches umfasst.

Hilfreich ist auch eine Gestaltung in einer solchen geometrischen Form, die die Verformung erleichtert.

Als günstig hat sich eine Gestaltung des Kolbens in Form eines nach zwei Seiten offenen Hohlkolbens mit einer ersten und einer zweiten Einbuchtung erwiesen, wobei die erste Einbuchtung zusammen mit der Trennvorrichtung die Nebenkammer bildet.

Eine derartige Form lässt sich beispielsweise durch Eindrücken der Bodenfläche eines aus einem verformbaren Material bestehenden Bechers erreichen. Vorzugsweise erfolgt das Eindrücken durch einen Stempel, insbesondere einen halbkugelförmigen Stempel.

Denkbar ist auch die Fertigung eines derartigen Kolbens durch Spritzgießen oder Tiefziehen und/oder Thermoverformung eines verformbaren Materials.

Zur besseren Abdichtung des Kolbens gegen die Kapselwand weist der Kolben vorzugsweise eine oder mehrere Dichtlippen auf.

Eine zusätzliche Dichtwirkung kann durch eine Gestaltung erreicht werden, die beim Applikationsvorgang ein Aufspreizen des kollabierenden Kolbens verbunden mit einem Anpressen an die Kapselwand erlaubt.

Gegebenenfalls kann das Entweichen flüchtiger Substanzen, die sich insbesondere in der Nebenkammer der Mischkapsel befinden, durch Aufsiegeln einer Siegelfolie auf die bodenseitige Öffnung der Mischkapsel, in die der Kolben eingeführt wird, verhindert werden.

Die Kombination von verformbarem Kolben und Mischkörper, dessen äußere Form während des Mischvorgangs zerstört wird bzw. der während des Mischvorgangs in die anzumischende Masse eingebunden wird, ist insbesondere dann vorteilhaft, wenn eine nahezu vollständige Ausbringung der angemischten Masse sichergestellt werden soll.

Um ein vollständigeres Ausbringen der Mischung aus der Mischkapsel zu gewährleisten, kann es auch vorteilhaft sein, auf die Außenseite des Kolbenbodens eine Anformung anzubringen. Eine solche Anformung kann in Gestalt einer Verdickung des Kolbenbodens oder als ein Distanzstück, vorzugsweise zylinderförmig, vorliegen. Da zum Ausbringen der Mischung eine Applikationsvorrichtung erforderlich ist, welche über eine verschiebbare Kolbenstange bzw. einen Stempel mit definierter, im Handel standardisierter Länge verfügt, ist es gegebenenfalls erforderlich, die axiale Länge des Stempels über die Anformung zu verlängern. Auf diese Weise kann sichergestellt werden, dass der verformbare Kolben bis in den Bereich der Ausbringtülle verschoben werden kann. Weiterhin vorteilhaft ist, dass sich das Risiko, dass die Kolbenstange bzw. der Stempel des Applikationsgeräts beim Verformen des Kolbens der Mischkapsel eingeklemmt wird, verringert.

Die in der Hauptkammer, der Nebenkammer und/oder der gegebenenfalls in der Trennvorrichtung enthaltenden Komponenten umfassen sowohl Flüssigkeiten als auch Feststoffe, vorzugsweise in Pulverform. Möglich sind aber auch pastenförmige Grundsubstanzen.

Die Feststoffe umfassen inerte Füllstoffe, wie feingemahlenen Quarz, SiOₓ-haltige Substanzen, Gläser, reaktive Füllstoffe aller Art, wobei die Feststoffe gegebenenfalls oberflächenmodifiziert vorliegen.

Die Flüssigkeiten umfassen insbesondere matrixbildende, polymerisierbare Substanzen, beispielsweise Polysäuren, umfassend Acrylsäure-, Methacrylsäure-und Maleinsäurederivate sowie Copolymere davon.

Vorzugsweise eignet sich die Mischkapsel zum Lagern, Mischen und Ausbringen von Glasionomerzementen.

Die Ausbringtülle an der Mischkapsel setzt vorzugsweise koaxial, gegebenenfalls aber auch exzentrisch an der Hauptkammer an.

Die Ausbringtülle ist ferner vorzugsweise verschließbar ausgestaltet. Denkbare Ausführungsformen sind beispielsweise in der EP 0 157 121 A beschrieben, wo die Ausbringtülle schwenkbar gelagert ist, so dass je nach Stellung der Ausbringtülle diese verschlossen oder geöffnet ist. Ebenfalls denkbar ist die Verwendung einer Rüsselverdrängungskappe zum Verschließen der Ausbringtülle.

Die Mischkapsel weist gegebenenfalls eine Codierung auf. Geeignete Codierungen sind beispielsweise farbliche Kennzeichnungen, beispielsweise in Form von Farbringen, Etiketten, Bedruckungen oder elektronisch lesbare Codierungen (Barcode). Denkbar ist auch das Anbringen mehrerer Codierungen. Die Codierung kann dabei Informationen über die Mischzeit, das Material, den Hersteller und/oder das Verfallsdatum enthalten. Die Codierung kann auch durch eine Einfärbung eines Mischkapsel-Bestandteiles, vorzugsweise der Tülle erfolgen.

Eine Codierung der Mischkapsel bzw: der darin befindlichen Substanzen über eine farbige Gestaltung der Ausbringtülle ist insbesondere dann vorteilhaft, wenn in der Mischkapsel lichtempfindliche Substanzen gelagert werden sollen. Um diese vor Lichteinfall zu schützen, ist es oftmals notwendig, den Kolben und/oder die Kartusche schwarz einzufärben. Sollen in der Kartusche unterschiedlich gefärbte Substanzen gelagert werden, kann eine Identifikation dieser Substanzen über die Farbe des nunmehr schwarz gefärbten Kolbens und/oder der Kartusche nicht mehr erfolgen.

Gegenstand der Erfindung ist auch die Verwendung der Mischkapsel zum Mischen von Dentalwerkstoffen, wobei der Machvorgang folgende Schritte umfasst :
a) Bereitstellen einer Mischkapsel nach einem der Ansprüche 1 bis 9,
b) Einlegen der Mischkapsel in ein Mischgerät mit einem Kapselhalter,
c) Beschleunigen der Mischkapsel vorzugsweise durch rasche translatorische und/oder rotatorische Bewegung, wodurch die die mindestens zwei durch eine Trennvorrichtung getrennten Kammern unter Bildung eines Mischraumes geöffnet werden,
d) Entnahme der Mischkapsel aus dem Mischgerät,

Eine herkömmliche Applikationsvorrichtung umfasst eine Halterung zum Einlegen der Mischkapsel und eine verschiebbare Kolbenstange, die so dimensioniert ist, dass sie den Kolben der Mischkapsel in Richtung der Ausbringöffnung bewegen kann.

Bevorzugte Ausführungsbeispiele der Mischkapsel werden nachstehend anhand der Zeichnungen erläutert.
- Figur 1: zeigt einen Längsschnitt durch eine Mischkapsel im Ausgangszustand.
- Figur 2: zeigt die gleiche Kapsel am Ende des Ausbringvorgangs.
- Figuren 3, 4: zeigen mögliche Präparierungen der Trennvorrichtung in Aufsicht.

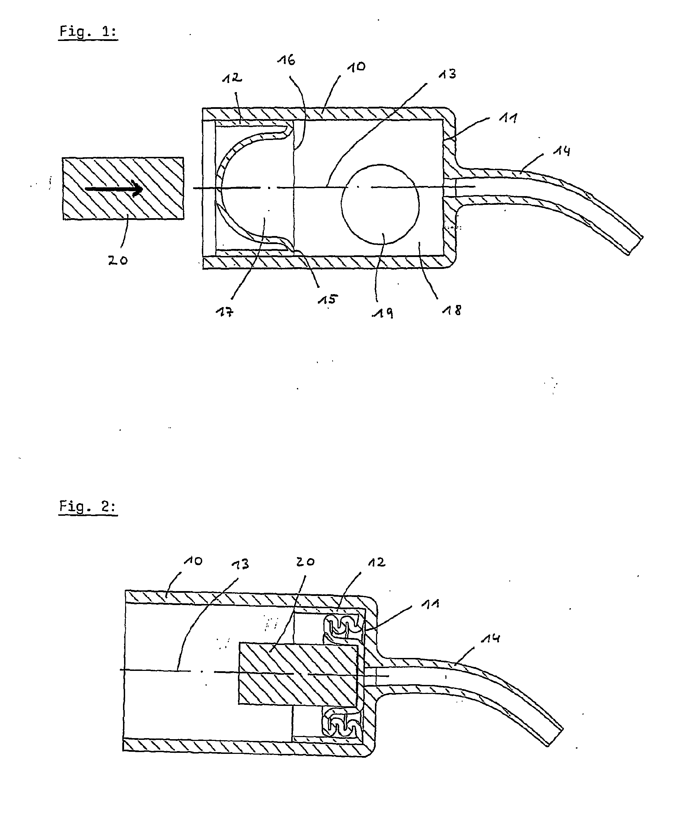

Gemäß Figur 1 umfasst die Mischkapsel eine zylindrische Kartusche 10, die an ihrem vorderen Ende durch eine Stirnwand 11 und an ihrem hinteren Ende durch einen Kolben 12 verschlossen ist. An der Stirnwand 11 ist eine gekrümmte Ausbringtülle 14 koaxial zur Kartuschenachse 13 angeformt. Die Ausbringtülle 14 ist gegebenenfalls verschließbar ausgebildet, beispielsweise mit einem Verdrängungsstopfen.

Der Kolben 12 ist mit einer zur Kartuschenachse 13 koaxialen Vertiefung versehen, die durch eine an der ringförmigen vorderen Stirnfläche 15 des Kolbens 12 befestigten Trennvorrichtung 16 verschlossen ist. Die Trennvorrichtung 16 trennt die von der Vertiefung gebildeten Nebenkammer 17 vom übrigen Innenraum der Kartusche, der hier als Hauptkammer 18 bezeichnet wird. Der Kolben 12 besitzt auf der der Nebenkammer gegenüberliegenden Seite eine weitere koaxiale Vertiefung, die an die Form der Nebenkammer angepasst ist.

Im Ausgangs- und/oder Lagerzustand enthält die Hauptkammer 18 gegebenenfalls eine erste, beispielsweise pulverförmige und/oder granulatförmige Komponente und die Nebenkammer 17 eine zweite, beispielsweise flüssige Komponente des herzustellenden Gemisches.

Die Mischkapsel enthält femer einen frei beweglichen, gegebenenfalls kugelförmigen Körper 19, der sich im Ausgangs- und/oder Lagerzustand der Kapsel in der Hauptkammer 18 befindet und dessen Radius vorzugsweise etwas kleiner ist als der Radius der die Nebenkammer 17 bildenden Vertiefung. Der Körper 19 und die Nebenkammer 17 können auch andere, von der Kugel- bzw. Halbkugelform abweichende Formen haben. Frei beweglich heißt, dass sich der Körper grundsätzlich in alle Richtungen bewegen lässt und nicht durch irgendwelche Führungsschienen in seiner Bewegung beeinträchtigt ist.

Der Übergang zwischen der die Nebenkammer 17 bildenden Vertiefung und der vorzugsweise ringförmigen Stirnfläche 15 des Kolbens 12, ist vorzugsweise verrundet ausgebildet, kann aber auch gegebenenfalls über einen Winkelbereich scharfkantig ausgebildet sein. Die Scharfkantigkeit kann auch durch eine Zahnung erzeugt sein. Die Verrundung verhindert, dass die Trennvorrichtung während des Mischvorgangs an diesem Stirnflächen-Innenrandbereich abreißt.

Ist der Rand der Nebenkammer 17 durchgehend verrundet, so kann die Trennvorrichtung 16 dadurch zum Reißen gebracht werden, dass sie durch den Aufprall des Körpers 19 zu Beginn des Mischvorgangs vorzugsweise an der Sollbruchstelle überdehnt wird.

Zum Gebrauch wird die Mischkapsel, die in dem in Figur 1 dargestellten Zustand vom Hersteller geliefert wird, in ein übliches Kapsel-Mischgerät eingelegt, in dem sie beispielsweise längs der Kartuschenachse 13 in Schwingungen versetzt wird. Neben rein translatorischen Bewegungen der Kapsel sind rotatorische Bewegungen möglich, gegebenenfalls in Kombination mit translatorischen Bewegungen. Dabei trifft der Körper 19 auf die Trennvorrichtung 16 und durchschlägt diese. Dadurch werden Hauptkammer 18 und Nebenkammer 17 zu einem gemeinsamen Mischraum verbunden. In diesem Mischraum werden während des weiteren Mischvorgangs die Komponenten zusammengemischt. Während des Mischvorgangs zerbricht der Körper 19 und wird dabei in die anzumischende Masse eingebettet, vorzugsweise eingearbeitet.

Zum Ausbringen des fertigen Gemisches wird der Kolben 12 in einem handelsüblichen Applikationsinstrument mit einem Stempel 20 nach vorne verschoben bis er abhängig von der Materialbeschaffenheit des Kolbens die in Figur 2 gezeigte Stellung erreicht und vorzugsweise keine Nebenkammer mehr aufweist.

Vorzugsweise erfolgt die Verformung unter Verringerung des Volumens der Nebenkammer erst dann, wenn die Ringfläche 15 des Kolbens 12 zum Anliegen an die Stimwand der Kartusche gekommen ist. Dies kann beispielsweise dadurch erreicht werden, dass die Reibungskraft zwischen Kolben und Kartuscheninnenwand geringer ist als die Kraft, die zur Verformung des Kolbens aufgewandt werden muss.

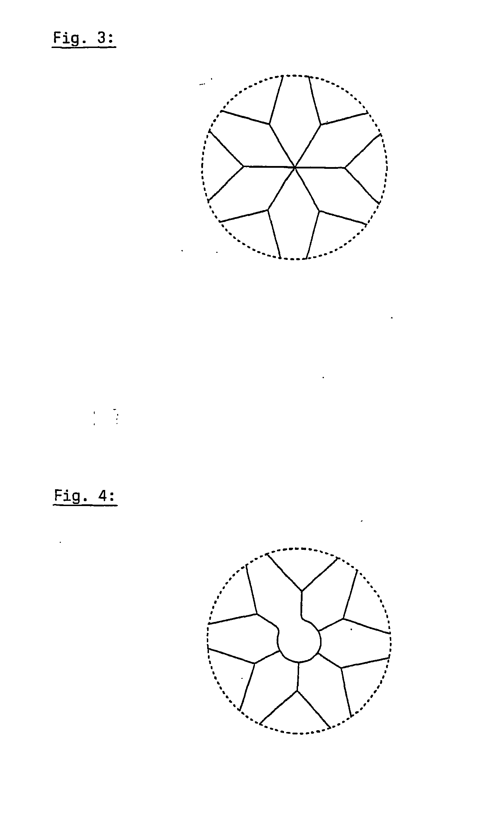

In den Figuren 3 und 4 sind in Aufsicht mögliche Präparierungen der Trennvorrichtung 16 dargestellt, die es ermöglichen, dass die Mischkapsel einfach und weitgehend vollständig aktiviert werden kann, ohne dass Bestandteile der Trennvorrichtung beim Mischen in die gemischte Masse eingebettet werden. Vorzugsweise erfolgt- die Präparation durch eine Vorschädigung der für die Trennvorrichtung verwendeten Folie, beispielsweise durch Strahleneinwirkung.

Die Mischkapsel wird üblicherweise zusammen mit einer weiteren Vorrichtung verwendet. Unter Vorrichtung im Sinne der Erfindung ist zum einen ein Gerät zu verstehen, das zur Aktivierung der Mischkapsel eingesetzt wird, vorzugsweise ein Gerät, das die Mischkapsel in translatorische und/oder rotatorische Bewegung versetzen kann, zum anderen, ein Gerät, das das Ausbringen der angemischten Masse aus der Mischkapsel erleichtert, vorzugsweise eine Vorrichtung, umfassend einen Stempel bzw. eine verschiebbare Kolbenstange.

### Bezugszeichenliste

- 10: Kartusche
- 11: Stirnwand
- 12: Kolben
- 13: Kartuschenachse
- 14: Ausbringtülle
- 15: Stirnfläche des Kolbens
- 16: Folie
- 17: Nebenkammer
- 18: Hauptkammer
- 19: Körper
- 20: Stempel

## Patentansprüche

1. Mischkapsel, umfassend an ihrem einen Ende eine Ausbringtülle (14) und an ihrem anderen Ende eine durch einen Kolben (12) abgedichtete Hauptkammer (18) zur Aufnahme einer ersten Komponente, eine in dem Kolben (12) vorgesehenen Nebenkammer (17) zur Aufnahme einer zweiten Komponente, mindestens einen frei beweglichen Körper (20) und eine die Nebenkammer (17) von der Hauptkammer (18) trennende, von dem Körper (20) während des Mischvorgangs zu durchschlagende Trennvorrichtung (16), wobei der Körper (20) bei geschlossener Trennvorrichtung (16) in der Hauptkammer (18) angeordnet ist, und wobei die äußere Form des Körpers (19) beim Mischvorgang zerstört wird und sich der Kolben (12) beim Ausbringen der Mischung verformen lässt.

2. Mischkapsel nach Anspruch 1, wobei der Körper (19) kugelförmig gestaltet ist, die Form eines Rotationseilipsoid oder Kanten und Ecken aufweist.

3. Mischkapsel nach einem der vorhergehenden Ansprüche, wobei der Körper (19) ein Material umfasst, das als erste Komponente in die Hauptkammer (18) eingebracht wird.

4. Mischkapsel nach einem der vorhergehenden Ansprüche, wobei die Trennvorrichtung (16) zur Ausbildung mindestens einer Sollbruchstelle vorpräpariert ist.

5. Mischkapsel nach Anspruch 4, wobei die Vorpräparierung sternförmig, sternförmig zur Stirnfläche der Nebenkammer hin verzweigt ist und/oder einen kegelförmigen Bereich aufweist.

6. Mischkapsel nach einem der vorhergehenden Ansprüche, wobei die Reibungskraft zwischen Kolben und Kartuscheninnenwand geringer ist als die Kraft, die zur Verformung des Kolbens aufgewandt werden muss.

7. Mischkapsel nach einem der vorhergehenden Ansprüche, wobei das Material des Kolbens (12) Metalle und/oder Kunststoffe umfasst.

8. Mischkapsel nach einem der vorhergehenden Ansprüche, wobei der Kolben die Form eines nach zwei Seiten offenen Hohlkolbens aufweist.

9. Mischkapsel nach einem der vorhergehenden Ansprüche, wobei die Trennvorrichtung (16) mindestens eine metallhaltige Folie und/oder kohlenwasserstoffhaltige Schichten und/oder keramische Barriereschichten, wie SiOₓ- Schichten umfasst.

10. Verwendung einer Mischkapsel nach einem der vorhergehenden Ansprüche zum Mischen von Dentalwerkstoffen.

11. Verwendung nach Anspruch 10, wobei der Mischworgang folgende Schritte umfasst :
a) Bereitstellen einer Mischkapsel nach einem des Anspruche 1 bis 9
b) Einlegen der Mischkapsel in ein Mischgerät mit einem Kapselhalter,
c) Beschleunigen der Mischkapsel durch translatorische und/oder rotatorische Bewegung, wodurch die mindestens zwei durch eine Trennvorrichtung getrennten Kammern unter Bildung eines Mischraumes geöffnet werden,
d) Entnahme der Mischkapsel aus dem Mischgerät.

12. Mischgerät mit einem Kapselhalter, enthaltend eine Mischkapsel nach einem der Ansprüche 1 bis 8.

## Claims

1. Mixing capsule, comprising, at its one end, a dispensing spout (14) and, at its other end, a main chamber (18) sealed by a piston (12) for receiving a first component, an auxiliary chamber (17) which is provided in the piston (12) and receives a second component, at least one freely movable body (20), and a separating device (16) which separates the auxiliary chamber (17) from the main chamber (18) and through which the body (20) is to penetrate during the mixing procedure, the body (20) being arranged in the main chamber (18) when the separating device (16) is closed, and the outer shape of the body (19) being destroyed during the mixing procedure and the piston (12) being able to deform during the dispensing of the mixture.

2. Mixing capsule according to Claim 1, in which the body (19) is of spherical design, having the form of an ellipsoid of revolution or edges and corners.

3. Mixing capsule according to one of the preceding claims, in which the body (19) comprises a material which is introduced as first component into the main chamber (18).

4. Mixing capsule according to one of the preceding claims, in which the separating device (16) is prepared in advance in order to form at least one desired breaking point.

5. Mixing capsule according to Claim 4, in which the advance preparation is star-shaped, is branched in a star shape towards the end face of the auxiliary chamber and/or has a skittle-shaped area.

6. Mixing capsule according to one of the preceding claims, in which the frictional force between the piston and the inside wall of the cartridge is less than the force that has to be applied to deform the piston.

7. Mixing capsule according to one of the preceding claims, in which the material of the piston (12) comprises metals and/or plastics.

8. Mixing capsule according to one of the preceding claims, in which the piston is in the form of a hollow piston that is open at both ends.

9. Mixing capsule according to one of the preceding claims, in which the separating device (16) comprises at least one metal-containing foil and/or hydrocarbon-containing layers and/or ceramic barrier layers, such as SiOₓ layers.

10. Use of a mixing capsule according to one of the preceding claims, for mixing dental materials.

11. Use according to Claim 10, in which the mixing procedure comprises the following steps:
a) provision of a mixing capsule according to one of Claims 1 to 9,
b) insertion of the mixing capsule into a mixer unit with a capsule holder,
c) acceleration of the mixing capsule by translational and/or rotary movement, as a result of which the at least two chambers separated by a separating device are opened to form one mixing space,
d) removal of the mixing capsule from the mixer unit.

12. Mixer unit with a capsule holder, including the mixing capsule according to one of Claims 1 to 8.

## Revendications

1. Capsule de mélange, englobant à l'une de ses extrémités une douille d'extraction (14) et à son autre extrémité un compartiment principal (18) rendu étanché par un piston (12) et destiné à recevoir une première composante, un compartiment annexe (17) prévu dans le piston (12) et destiné à recevoir une deuxième composante, au moins un corps (20) mobile libre et un dispositif de séparation (16) qui isole le compartiment annexe (17) du compartiment principal (18), à transpercer par le corps (20) pendant l'opération de mélange, le corps (20) étant disposé dans le compartiment principal (18) lorsque le dispositif de séparation (16) est fermé et la forme extérieure du corps (19) étant détruite lors de l'opération de mélange et le piston (12) se laissant déformer lors de l'extraction du mélange.

2. Capsule de mélange selon la revendication 1, le corps (19) étant en forme de bille et présentant la forme d'un ellipsoïde à rotation ou des bords et des coins.

3. Capsule de mélange selon l'une des revendications précédentes, le corps (19) englobant un matériau qui est introduit en tant que première composante dans le compartiment principal (18).

4. Capsule de mélange selon l'une des revendications précédentes, le dispositif de séparation (16) étant préparé à l'avance pour former au moins un point de rupture voulu.

5. Capsule de mélange selon la revendication 4, la préparation à l'avance présentant une zone étoilée, étoilée ramifiée en direction de la surface frontale du compartiment annexe et/ou cunéiforme.

6. Capsule de mélange selon l'une des revendications précédentes, la force de frottement entre le piston et la paroi intérieure de la cartouche étant inférieure à la force qui doit être employée pour la déformation du piston.

7. Capsule de mélange selon l'une des revendications précédentes, le matériau du piston (12) englobant des métaux et/ou des matières plastiques.

8. Capsule de mélange selon l'une des revendications précédentes, le piston présentant la forme d'un piston creux ouvert vers deux cotés.

9. Capsule de mélange selon l'une des revendications précédentes, le dispositif de séparation (16) englobant au moins un film contenant du métal et/ou des couches contenant des hydrocarbures et/ou des couches de barrière en céramique telles que des couches en SiOₓ.

10. Utilisation d'une capsule de mélange selon l'une des revendications précédentes pour le mélange de matériaux dentaires.

11. Utilisation d'une capsule de mélange selon la revendication 10, l'opération de mélange comprenant les étapes suivantes :
a) Fourniture d'une capsule de mélange selon l'une des revendications 1 à 9,
b) Introduction de la capsule de mélange dans un mélangeur muni d'un porte-capsule,
c) Accélération de la capsule de mélange, de préférence par un mouvement translatoire et/ou rotatif brutal, les au moins deux compartiments séparés par un dispositif de séparation étant ainsi ouverts en formant un espace de mélange,
d) Retrait de la capsule de mélange du mélangeur.

12. Mélangeur muni d'un porte-capsule, contenant une capsule de mélange selon l'une des revendications 1 à 8.
